# NEW EUROPEAN PATENT SPECIFICATION

(11) **EP 0 882 050 B2**
(45) Date of publication and mention of the opposition decision: **04.05.2005**
(45) Mention of the grant of the patent: 28.08.2002
(21) Application number: 97901569.0
(22) Date of filing: 21.01.1997
(51) Int. Cl.: C07D 473/18

(54) **PROCESS FOR PREPARING PURINE DERIVATIVES**
VERFAHREN ZUR HERSTELLUNG VON PURIN-DERIVATEN
PROCEDE POUR LA PREPARATION DE DERIVES DE LA PURINE

(30) Priority: 26.01.1996 US 592079
(43) Date of publication of application: 09.12.1998
(73) Proprietor: F. Hoffmann-La Roche AG, 4070 Basel (CH)
(72) Inventor: ARZENO, Humberto, B., Cupertino, CA 95014-5252 (US); AXT, Steven, D., San Jose, CA 95130 (US); BEARD, Colin, C., Palo Alto, CA 94303 (US); DVORAK, Charles, A., Palo Alto, CA 94306 (US); FATHEREE, Paul, R., San Francisco, CA 94117 (US); FISHER, Lawrence, E., Mountain View, CA 94040 (US); HAN, Yeun-Kwei, Louisville, CO 80027 (US); HUMPHREYS, Eric, R., San Bruno, CA 94066 (US); LUND, Jan, P., Boulder, CO 80301 (US); NGUYEN, Sam, Linh, Denver, CO 80206 (US); WREN, Douglas, Leslie, Palo Alto, CA 94306 (US)
(74) Representative: Keller, Günter, Dr.
(86) International application number: PCT/EP1997/000262
(87) International publication number: WO 1997/027198

(56) References cited:
- EP-A- 0 308 065
- EP-A- 0 375 329
- EP-A- 0 532 878
- EP-A- 0 694 547
- GB-A- 2 122 618

## Description

### BACKGROUND OF THE INVENTION

### Field of the Invention

The present invention relates to a process for preparing a prodrug formulation of ganciclovir and its pharmaceutically acceptable salts. More specifically, the invention relates to a process for preparing the L-monovaline ester derived from 2-(2-amino-1,6-dihydro-6-oxo-purin-9-yl)methoxy-1,3-propane-diol and its pharmaceutically acceptable salts. The invention also relates to novel intermediates useful in the above process and to a process for preparing the intermediate.

### Background Information

British Patent 1523865 describes antiviral purine derivatives with an acyclic chain in the 9-position. Among those derivatives 2-(2-amino-1,6-dihydro-6-oxo-purin-9-yl)methoxy-ethanol with the INN name acyclovir has been found to have good activity against herpes viruses such as herpes simplex.

U.S. Patent 4,355,032 discloses the compound 9-[(2-hydroxy-1-hydroxymethyl-ethoxy)methyl]-guanine or 2-(2-amino-1,6-dihydro-6-oxo-purin-9-yl)methoxy-1,3-propanediol or 9-[(1,3-dihydroxy-2-propoxy)-methyl]-guanine (DHPG) with the INN name ganciclovir. Ganciclovir is highly efficacious against viruses of the herpes family, for example, against herpes simplex and cytomegalovirus.

British Patent Application GB 2 122 618 discloses derivatives of 9-(2-hydroxyethoxymethyl)guanine of the generic formula: 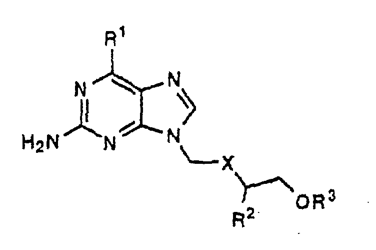 wherein X represents an oxygen or sulfur atom, R¹ represents a hydroxy or an amino group, R₂ represents a hydrogen atom or a group of the formula CH₂OR³ₐ and R³ and R³ₐ may be the same or different, each represents an amino acid acyl radical and physiologically acceptable salts thereof. These compounds can be prepared by condensing a guanine derivative with a side chain intermediate in a strong polar solvent such as dimethylformamide or hexamethylphosphoramide, advantageously in the presence of a base, or by thermal condensation in the presence of a strong acid. These compounds are useful for the treatment of viral infections and have high water solubility which renders them of value in the formulation of aqueous pharmaceutical preparations. While the generic formula in the British patent application includes compounds in which R² is the group -CH₂OR³ₐ, specific compounds of this group are not disclosed.

European Patent Application EP 0 375 329 discloses prodrug compounds with the following formula 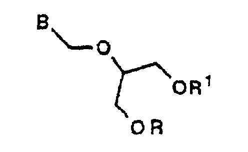 wherein R and R¹ are independently selected from a hydrogen atom and an amino acyl residue providing at least one of R and R¹ represents an amino acid acyl residue and B represents a group of the formulae 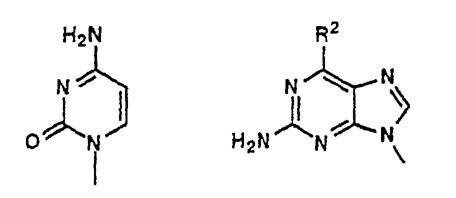 in which R² represents a C₁₋₆ straight chain, C₃₋₆ branched chain or C₃₋₆ cyclic alkoxy group, or a hydroxy or amino group or a hydrogen atom and the physiologically acceptable salts thereof. These prodrug compounds are described as having advantageous bioavailability when administered the oral route, resulting in high levels of the parent compound in the body.

Example 3 (b) European Patent Application EP 0 375 329 discloses the preparation of the bis(L-isoleucinate) ester of ganciclovir as a white foam. Example 4 (b) discloses the preparation of the bis(glycinate) ester of ganciclovir as a white solid. Example 5 (b) discloses the preparation of the bis (L-valinate) ester of ganciclovir as a solid. Example 6 (b) discloses the preparation of the bis(L-alaninate) ester of ganciclovir as a syrup containing 90% of the bis ester and 10% of the monoester. The bis-esters are prepared by reacting ganciclovir with an optionally protected amino acid or functional equivalent thereof; the reaction may be carried out in a conventional manner, for example in a solvent such as pyridine, dimethyl formamide, etc., in the presence of a coupling agent such as 1,3-dicyclohexylcarbodiimide, optionally in the presence of a catalytic base such as 4-dimethylaminopyridine. The described bis esters are non-crystalline materials which are difficult to process for the manufacture of oral pharmaceutical dosage forms.

British Patent Application No. 8829571 is the priority patent application for European Patent Application EP 0 375 329 and US Patent No. 5,043,339, and discloses amino acid esters of the compounds of the formula 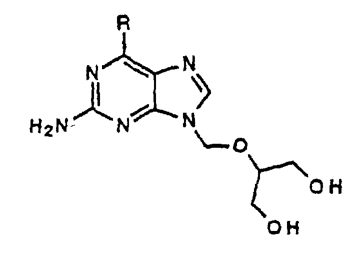 (wherein R represents a hydroxy or amino group or a hydrogen atom) and the physiologically acceptable salts thereof. Examples of preferred amino acids include aliphatic acids e.g. containing up to 6 carbon atoms such as glycine, alanine, valine and isoleucine. The amino acid esters include both mono and diesters. The preparation of the diesters is identical to the preparation in European Patent Application EP 0 375 329; however, this patent application as well as European Patent Application EP 0 375 329 and US Patent No. 5,043,339 do not disclose the preparation of monoesters, or any data suggesting their usefulness.

Leon Colla et. al., J. Med. Chem. (1983) 26, 602-604 disclose several water-soluble ester derivatives of acyclovir and their salts as prodrugs of acyclovir. The authors indicate that acyclovir cannot be given as eye drops or intramuscular injections because of its limited solubility in water and have therefore synthesized derivatives of acyclovir which are more water soluble than the parent compound. The authors disclose the hydrochloride salt of the glycyl ester, the hydrochloride salt of the alanyl ester, the hydrochloride salt of the b-alanyl ester, the sodium salt of the succinyl ester, and the azidoacetate ester. The alanyl esters were prepared by conventional esterification methods, including reacting acyclovir with the corresponding N-carboxy-protected amino acid in pyridine, in the presence of 1,3-dicyclohexylcarbodiimide and a catalytic amount of p-toluenesulfonic acid and subsequently subjecting to catalytic hydrogenation to give the alpha- and beta-alanyl esters as their hydrochloride salts.

L. M. Beauchamp et. al., Antiviral Chemistry & Chemotherapy (1992), 3 (3), 157-164 disclose eighteen amino acid esters of the antiherpetic drug acyclovir and their efficiencies as prodrugs of acyclovir, evaluated in rats by measuring the urinary recovery of acyclovir. Ten prodrugs produced greater amounts of the parent drug in the urine than acyclovir itself: the glycyl, D,L-alanyl, L-alanyl, L-2-aminobutyrate, D,L-valyl, L-valyl, DL-isoleucyl, L-isoleucyl, L-methionyl, and L-prolyl ester. According to the authors the L-valyl ester of acyclovir was the best prodrug of the esters investigated. These esters were prepared by methods similar to those employed by Colla et. al.

European Patent Publication 308 065 discloses the valine and isoleucine esters of acyclovir, preferably in the L-form, as showing a large increase in absorption from the gut after oral administration, when compared with other esters and acyclovir. The amino acid esters are prepared by conventional esterification methods, including reacting acyclovir with an N-carboxy-protected amino acid or an acid halide or acid anhydride of the amino acid, in a solvent such as pyridine or dimethylformamide, optionally in the presence of a catalytic base. The amino acid esters of acyclovir may also be prepared by condensing a guanine derivative with an amino acid side-chain intermediate in a manner analogous to that disclosed in British Patent Application GB 2 122 618, discussed above.

PCT Patent Application WO 94/29311 discloses a process for the preparation of amino acid esters of a nucleoside analogue, including acyclovir and ganciclovir. This process comprises reacting a nucleoside analogue having an esterifiable hydroxy group in its linear or cyclic ether moiety, with a 2-oxa-4-aza-cycloalkane-1,3-dione of the formula 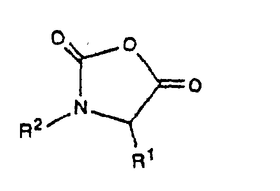 wherein R¹ may represent hydrogen, C₁₋₄ alkyl or alkenyl group or other amino acid side chains, and R² may represent hydrogen or a group COOR³ where R³ is a benzyl, t-butyl, fluorenylmethyl or an optionally halo substituted linear or branched C₁₋₈ alkyl group. Preferred R¹ groups include hydrogen, methyl, iso-propyl and isobutyl, yielding respectively the glycine, alanine, valine and isoleucine esters of acyclovir or ganciclovir. Examples 1-3 of PCT Patent Application WO 94/29311 discloses only the condensation of acyclovir with the valine-substituted 2-oxa-4-aza-cycloalkane-1,3-dione (Z-valine-N-carboxyanhydride) by conventional procedures. While the amino acid esters of the PCT application include both the acyclovir and ganciclovir (DHPG) esters, the application does not disclose how to prepare the ganciclovir esters, much less the mono-esters of ganciclovir.

The L-monovaline ester derived from 2-(2-amino-1,6-dihydro-6-oxo-purin-9-yl)methoxy-1,3-propane-diol and its pharmaceutically acceptable salts are potent antiviral agents and are described in European Patent Application Publication No. 694.547. These compounds have been found to have improved oral absorption and low toxicity. This patent application also discloses certain processes for preparing these esters, different from those described herein.

The present invention relates to an improved process and novel intermediates whereby an acid addition salt of a mono-hydroxy protected ganciclovir is formed as a novel intermediate, which reduces impurities in the mono-valine ester end-product, compared to known intermediates. This also eliminates the costly and time consuming purification steps and allows the use of starting materials of lower purity, which, in turn, reduces overall production costs.

### SUMMARY OF THE INVENTION

In a first aspect, this invention provides a process for preparing the compound of the formula I: 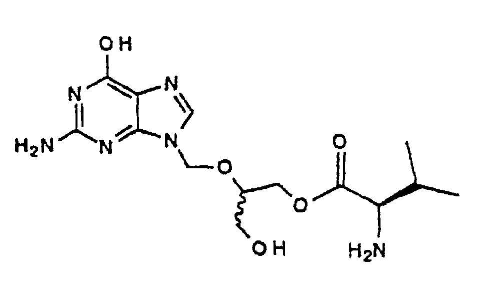 and pharmaceutically acceptable salts thereof, which compound is named hereinafter 2-(2-amino-1,6-dihydro-6-oxo-purin-9-yl)methoxy-3-hydroxy-1-propyl-L-valinate or mono-L-valine ganciclovir.

This process involves the condensation of an optionally-substituted guanine compound with a substituted glycerol derivative, followed by formation of an acid addition salt of a mono-hydroxy protected ganciclovir as an intermediate; esterification of this product with an L-valine derivative and the removal of any protecting groups forms the prodrug of Formula I. Optionally, the process can also include the formation of salts of the prodrug of Formula I, the conversion of an acid addition salt of the prodrug of Formula I into a non-salt form, the optical resolution of a prodrug of Formula I or the preparation of the prodrugs of Formula I in crystalline form. Details of the process are described below.

In a second aspect, this invention discloses compounds of Formula V and Formula IV which are useful intermediates for preparing mono-L-valine ganciclovir and its pharmaceutically acceptable salts. The compounds of Formula V are : 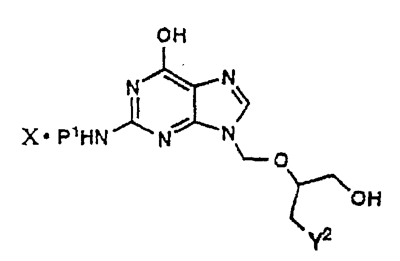 wherein X is an acid addition salt moiety, Y² is a halo, lower acyloxy, an optionally substituted aralkyloxy group, and P¹ is hydrogen or an amino-protecting group. The compounds of Formula IV are: 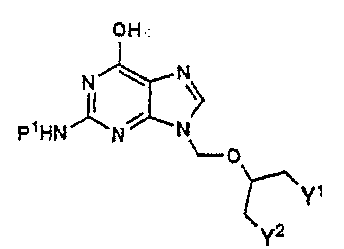 wherein P¹ is an amino-protecting group which is lower acyl with 1-4 carbon atoms, Y¹ is halo, lower acyloxy or an optionally substituted aralkyloxy group and Y² is a lower acyloxy of 1-4 carbon atoms.

A third aspect of this invention is a process for preparing the novel intermediates of Formula V and IV.

### DETAILED DESCRIPTION OF THE INVENTION

### Definitions

Unless otherwise stated, the following terms used in the specification and claims have the meanings given below:
"BOC" means t-butoxycarbonyl.
"CBZ" means carbobenzyloxy (benzyloxycarbonyl).
"FMOC" means N-(9-fluorenylmethoxycarbonyl).
"DHPG" means 9-[(1,3-dihydroxy-2-propoxy)methyl] guanine.
"Alkyl" means a straight or branched saturated hydrocarbon radical having from one to the number of carbon atoms designated. For example, C₁₋₇ alkyl is alkyl having at least one but no more than seven carbon atoms, e.g. methyl, ethyl, i-propyl, n-propyl, n-butyl, n-pentyl, n-heptyl and the like.
"Lower alkyl" means an alkyl of one to six carbon atoms.
"Aryl" means an organic radical derived from an aromatic hydrocarbon by the removal of one hydrogen atom. Preferred aryl radicals are aromatic carbocyclic radicals having a single ring (e.g., phenyl) or two condensed rings (e.g., naphthyl).
"Aralkyl" means an alkyl group in which a hydrogen atom is replaced by an above-defined aryl group.
"Aryl" means an organic radical derived from an organic acid by the removal of the hydroxyl group; e.g., CH₃CO- or acetyl is the acyl radical of CH₃COOH. Other examples for such acyl groups are propionyl, or benzoyl, etc. The term "aryl" includes the term "alkanoyl" which is the organic radical RCO- in which R is an alkyl group as defined above.
"Lower alkyloxy", "(lower alkyl)amino", "di(lower alkyl)amino", "(lower alkanoyl)amino", and similar terms mean alkoxy, alkylamino, dialkylamino, alkanoylamino, etc. in which the or each alkyl radical is a "lower alkyl" as described above.
"Halogen" or "halo" means fluorine, chlorine, bromine, or iodine.
"Trityl" means the triphenylmethyl radical (PH)₃C-.
"Derivative" of a compound means a compound obtainable from the original compound by a simple chemical process.
"Activated derivative" of a compound means a reactive form of the original compound which renders the compound active in a desired chemical reaction, in which the original compound is only moderately reactive or nonreactive. Activation is achieved by formation of a derivative or a chemical grouping within the molecule with a higher free energy content than that of the original compound, which renders the activated form more susceptible to react with another reagent. In the context of the present invention activation of the carboxy group is of particular importance and corresponding activating agents or groupings which activate the carboxy group are described in more detail below. An example of an activated derivative of L-valine is the compound of Formula VI: 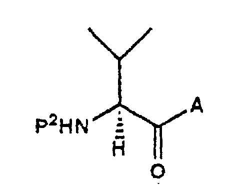
wherein P² is an amino-protecting group, and A is a carboxy-activating group, for example, halo, a lower acyloxy group, a carbodiimide group, such as 1-ethyl-3-(3-dimethylaminopropyl)carbodiimide (EDAC), an isobutyrate group, and the like.

Of particular interest for the present invention is an amino acid anhydride which is an activated form of an amino acid which renders the amino acid (especially L-valine) susceptible to esterification. Amino acid anhydrides are included in the compounds of Formula VI, above. Especially useful for the present invention are the cyclic amino acid anhydrides of L-valine, described in PCT Patent Application WO 94/29311, such as 2-oxa-4-aza-5-isopropyl-cycloalkane-2,3-dione of Formula VIa: 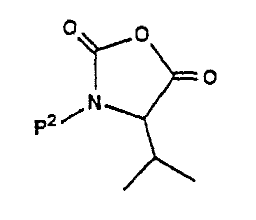 in which P² is an amino protecting group. Other examples of the cyclic amino acid anhydrides are protected amino acid N-carboxyanhydrides (NCAs) described in more detail below

"Protecting group" means a chemical group that (a) preserves a reactive group from participating in an undesirable chemical reaction; and (b) can be easily removed after protection of the reactive group is no longer required. For example, the benzyl group is a protecting group for a primary hydroxyl function.

"Amino-protecting group" means a protecting group that preserves a reactive amino group that otherwise would be modified by certain chemical reactions. The definition includes the formyl group or lower alkanoyl groups with 2 to 4 carbon atoms, in particular the acetyl or propionyl group, the trityl or substituted trityl groups, such as the monomethoxytrityl group, dimethoxytrityl groups such as the 4,4'-dimethoxytrityl or 4,4'-dimethoxytriphenylmethyl group, the phthalyl group, the silyl group, the trichloroacetyl group, the trifluoroacetyl group, and the N-(9-fluorenylmethoxycarbonyl) or "FMOC" group, the allyloxycarbonyl group, or other protecting groups derived from halocarbonates such as (C₆-C₁₂)aryl lower alkyl carbonates (such as the N-benzyloxycarbonyl group derived from benzylchlorocarbonate), or derived from biphenylalkyl halo carbonates, or tertiary alkyl halo carbonates, such as tertiary butylhalocarbonates, in particular tertiary butylchlorocarbonate, or di(lower)alkyldicarbonates, in particular di(t-butyl)dicarbonate, and the triphenylmethyl halides such as triphenylmethyl chloride, and trifluoroacetic anhydride.

"Hydroxy-protecting group" means a protecting group that preserves a hydroxy group that otherwise would be modified by certain chemical reactions. In the context of the present invention, the hydroxy-protecting group can be an ether- or ester-forming group that can be removed easily after completion of all other reaction steps, such as a lower acyl group (e.g., the acetyl or propionyl group), or an aralkyl group (e.g., the benzyl group, optionally substituted at the phenyl ring).

"Silylation catalyst" as used herein refers to catalysts that promote the silylation of guanine, for example ammonium sulfate, p-toluenesulfonic acid, trifluoromethane sulfonic acid, trimethylsilyltrifluoromethane sulfonate, bistrimethylsilyl sulfonate, sulfuric acid, potassium butylsulfonate, ammonium perchlorate, sodium perchlorate, sodium borofluoride or tin tetrachloride.

"Silylating agent" as used herein refers to a compound capable of silylating guanine. A preferred silylating agent is hexamethyldisilazane (which will give a compound of Formula (Ila)) in which R⁵, R⁶, and R⁷ are all methyl). However, many other silylating agents are known in the art. For example, guanine may be reacted with a trialkylsilyl halide of formula SiR⁵R⁶R⁷X, in which R⁵, R⁶, and R⁷ are independently lower alkyl and X is chloro or bromo, such as trimethylsilyl chloride, tert-butyldimethylsilyl chloride, and the like, preferably in the presence of about 1-2 molar equivalents of a base. The (per)silylated compound of Formula (Ila) is represented as follows:

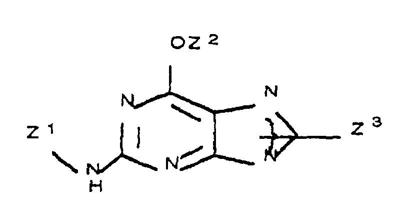

Formula (IIa) represents guanine protected by one, two, or three silyl groups, or a mixture thereof, where Z¹, Z², and Z³ are independently hydrogen or a silyl group of formula SiR⁵R⁶R⁷, provided that at least one of Z¹, Z², and Z³ must be a silyl group, in which R⁵, R⁶, and R⁷ are independently lower alkyl. It should be noted that Formula (IIa) as drawn represents a mixture of N-7 and N-9 isomers (as a tautomeric mixture).

"Leaving group" means a labile group that is replaced in a chemical reaction by another group. Examples of leaving groups are halogen, the optionally substituted benzyloxy group, the mesyloxy group, the tosyloxy group or the acyloxy group.

All the activating and protecting agents employed in the preparation of the compound of Formula I must meet the following qualifications: (1) their introduction should proceed quantitatively and without racemization of the L-valine component; (2) the protecting group present during the desired reaction should be stable to the reaction conditions to be employed; and (3) the group must be readily removed under conditions in which the ester bond is stable and under which racemization of the L-valine component of the ester does not occur.

The process of the invention may also include the optical resolution of a prodrug of Formula I. Terminology relating to the stereochemistry and optical resolution of these compounds is described in European Patent Application Publication No. 694.547, incorporated herein by reference.

"Optional" or "optionally" means that a described event or circumstance may or may not occur, and that the description includes instances where said event orcircumstance occurs and instances in which it does not. Forexample, "optionally substituted phenyl" means that the phenyl may or may not be substituted and that the description includes both unsubstituted phenyl and phenyl wherein there is substitution; "optionally followed by converting the free base to the acid addition salt" means that said conversion may or may not be carried out in order for the process described to fall within the invention, and the invention includes those processes wherein the free base is converted to the acid addition salt and those processes in which it is not.

"Pharmaceutically acceptable" means that which is useful in preparing a pharmaceutical composition that is generally safe and non-toxic and includes that which is acceptable for veterinary use as well as human pharmaceutical use.

"Pharmaceutically acceptable salts" means salts which possess the desired pharmacological activity and which are neither biologically nor otherwise undesirable. Such salts include acid addition salts formed with inorganic acids such as hydrochloric acid, hydrobromic acid, sulfuric acid, nitric acid, phosphoric acid, and the like; or with organic acids such as acetic acid, propionic acid, hexanoic acid, heptanoic acid, cyclopentane-propionic acid, glycolic acid, pyruvic acid, lactic acid, malonic acid, succinic acid, malic acid, maleic acid, fumaric acid, tartaric acid, citric acid, benzoic acid, o-(4-hydroxy-benzoyl)-benzoic acid, cinnamic acid, mandelic acid, methanesulfonic acid, ethanesulfonic acid, 1,2-ethane-disulfonic acid, 2-hydroxyethane-sulfonic acid, benzenesulfonic acid, p-chlorobenzenesulfonic acid, 2-naphthalenesulfonic acid, p-toluenesulfonic acid, camphorsulfonic acid, 4-methylbicyclo[2.2.2]oct-2-ene-1-carboxylic acid, gluco-heptonic acid, 4,4'-methylenebis(3-hydroxy-2-naphthoic) acid, 3-phenylpropionic acid, trimethyl-acetic acid, tertiary butylacetic acid, lauryl sulfuric acid, gluconic acid, glutamic acid, hydroxy-naphthoic acids, salicylic acid, stearic acid, muconic acid, and the like. Preferred pharmaceutically acceptable salts are those formed with hydrochloric, sulfuric, phosphoric acid, acetic or methanesulfonic acid, ethanesulfonic acid, 1,2-ethanedisulfonic acid, 2-hydroxyethanesulfonic acid, benzene-sulfonic acid, p-chlorobenzenesulfonic acid, 2-naphthalenesulfonic acid, p-toluenesulfonic acid, and camphorsulfonic acid.

### Synthetic Reaction Parameters

Unless specified to the contrary, the reactions described herein take place at atmospheric pressure within a temperature range from 5°C to 170°C (preferably from 10°C to 50°C; most preferably at "room" or "ambient" temperature, e.g., 20 to 30°C). However, there are clearly some reactions where the temperature range used in the chemical reaction will be above or below these temperature ranges. Further, unless otherwise specified, the reaction times and conditions are intended to be approximate, e.g., taking place at about atmospheric pressure within a temperature range of about 5°C to about 100°C (preferably from about 10°C to about 50°C; most preferably about 20°C) over a period of about 1 to about 100 hours (preferably about 5 to 60 hours). Parameters given in the Examples are intended to be specific, not approximate.

Isolation and purification of the compounds and intermediates described herein can be effected, if desired, by any suitable separation or purification procedure such as, for example, filtration, extraction, crystallization, column chromatography, thin-layer chromatography or thick-layer chromatography, or a combination of these procedures. Specific illustrations of suitable separation and isolation procedures can be had by reference to the examples hereinbelow. However, other equivalent separation or isolation procedures can, of course, also be used.

### Presently Preferred Embodiments

While the broadest definition of this invention is set forth in the Summary of the Invention as a process for preparing the compound of Formula I and its pharmaceutically acceptable salts, the (R,S) mixture and certain salts are preferred.

The following acids are preferred to form pharmaceutically acceptable salts with the compound of Formula I: hydrochloric, sulfuric, phosphoric acid, acetic, methanesulfonic, ethanesulfonic, 1,2-ethanedisulfonic, 2-hydroxyethanesulfonic, benzenesulfonic, p-chlorobenzenesulfonic, 2-naphthalenesulfonic, p-toluenesulfonic and camphorsulfonic acid. Most preferred are strong inorganic acids, such as hydrochloric, sulfuric or phosphoric acid.

The most preferred compounds are 2-(2-amino-2,6-dihydro-6-oxo-purin-9-yl)methoxy-3-hydroxy-1-propyl L-valinate hydrochloride and acetate. These compounds can be prepared as crystalline materials and therefore can be easily manufactured into stable oral formulations.

In any of the last step processes described herein, a reference to Formulae I, II, III, IV, V, VI, VIa or VII refers to such Formulae wherein P¹ and P², A, Y¹, Y², Z and X are as defined in their broadest definitions set forth in the Summary of the Invention, with the processes applying particularly to the presently preferred embodiments.

### Details of the Synthetic Processes

The process of the present invention is depicted in the Reaction Sequence shown below: 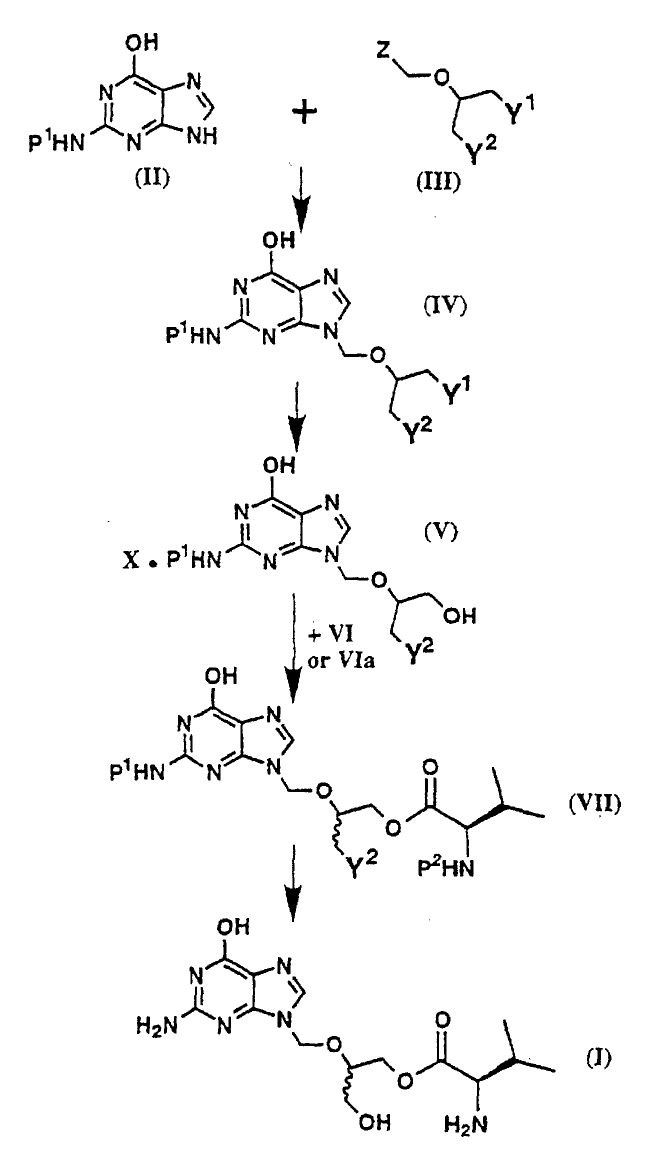 wherein P¹ is hydrogen or an amino-protecting group, P² is an amino-protecting group, and X is a pharmaceutically acceptable acid addition salt group. The compounds of Formula III are glycerol derivatives wherein Y¹ and Y² independently are halo, lower acyloxy, or an optionally substituted aralkyloxy group, and Z is a leaving group selected from lower acyloxy, isopropyloxy, benzyloxy, halo, mesyloxy or tosyloxy, and the like. In general, Y¹ and Y² of the glycerol derivative need to be chosen in such a way as to permit the obtention of the mono-L-valine ester of Formula I.

The guanine compound of Formula II, optionally in persilylatedform, is condensed with a 2-substituted glycerol of the Formula III to yield a compound of Formula IV, which is a 2-(2-amino-1,6-dihydro-6-oxo-purin-9-yl)methoxy-1,3-propanediol (ganciclovir) intermediate with protection at both hydroxy functions and optionally at the 2-amino moiety of the guanine group. When both hydroxy functions are protected, the compound of Formula IV is then de-protected at one of the hydroxy functions to provide the mono-protected ganciclovir intermediate, with subsequent or concomitant formation of the acid addition salt, to provide the novel intermediate of Formula V. Compounds of Formula V may be esterified with an activated derivative of L-valine of Formula VI or VIa to provide the compounds of Formula VII, optionally followed by removal of amino- and/or hydroxy-protecting groups to form a compound of Formula I.

Compounds of Formula I can optionally be converged into a pharmaceutically acceptable salt thereof. The process can also include the conversion of an acid addition salt of the prodrug of Formula I into a non-salt form, the optical resolution of a compound of Formula I or the preparation of the compound of Formula I in crystalline form.

The present invention is an improved process for the preparation of mono-L-valine ganciclovir, in which the formation of the intermediate of Formula V provides distinct advantages over the previously known procedures. This novel intermediate, which is an acid addition salt of a mono-hydroxy protected ganciclovir, provides for a substantial reduction in several impurities associated with the desired end-product.

First of all, the starting material for the preparation of some of the glycerol reagents of Formula III can be contaminated by certain impurities. These impurities are not removed during synthesis of the glycerol reagent, and when the reagent is reacted with guanine in the condensation reaction, it will give rise to the corresponding isomeric ganciclovir impurities. For example, the starting material forthe glycerol reagent of Formula III, wherein Y¹ is benzyloxy and Y² and Z are propionyloxy, can be the compound 1-benzyloxy-3-chloro-2-propanol. This starting material can contain 2-chloro-3-benzyloxypropanol or 2-benzyloxy-3-chloropropanol. Either of these impurities will give the corresponding impurity in the glycerol reagent and, in the ensuing condensation reaction with guanine, the impurity will carry through as an isomeric impurity of the ganciclovir intermediate.

Secondly, the reaction of guanine with the glycerol reagent of Formula III gives a mixture of product isomers: the desired 9-substituted guanine (the 9-isomer) and a small amount of the undesired 7-substituted guanine (the 7-isomer). If the glycerol reagent contains the impurities discussed above, then the corresponding impurities of ganciclovir will also be present. None of these impurities can be removed easily from the desired 9-isomer.

The present invention provides for the generation of an acid addition salt of the compound of Formula V, which allows for the isolation of the end-product essentially free of the 7-isomer and with levels of the impurities reduced by at least 50%. This acid addition salt intermediate can be prepared directly from the guanine reaction mixture which contains the di-hydroxy protected compound of Formula IV. Alternatively, the compound of Formula IV can be first deprotected at one of the hydroxy moieties to provide the mono-hydroxy protected ganciclovir, from which intermediate the acid addition salt is then prepared. Also, from the compound of Formula IV, one can first prepare the intermediate with protection at both hydroxy moieties and at the 2-amino moiety of the guanine group with, for example, an acyl anhydride. This procedure is advantageous because the fully protected intermediate can be crystallized free of the undesired 7-isomer. From this fully protected intermediate, the novel mono-hydroxy protected ganciclovir as an acid addition salt can be isolated. This fully-protected compounds are novel intermediates and are those compounds of the general Formula IV, wherein P¹ is an amino-protecting group which is lower acyl with 1-4 carbon atoms, Y¹ is a halo, lower acyloxy or an optionally substituted aralkyloxy group and Y² is a lower acyloxy of 1-4 carbon atoms, so that the acyl group of P¹ and Y² are the same. A preferred fully-protected intermediate is dipropionyl-monobenzyl ganciclovir or diacetyl-monobenzyl ganciclovir.

In general, the process for producing the compounds of Formula I may or may not involve protection of the amino group in the 2-position of the guanine base. These protecting groups may be removed prior to the formation of the salt intermediate of Formula V, after the esterification step or in the last deprotection step. For the case when the ganciclovir intermediates have a protected 2-amino group the protecting group may be removed by conventional procedures. For example, if the amino-protecting group is a lower alkanoyl group, basic conditions (pH between 8 to 11) are employed to remove the protecting group. For example, a 2-N-acetyl-ganciclovir intermediate is treated with an alkaline reagent such as ammonium hydroxide, sodium or potassium carbonate or sodium or potassium hydroxide until the removal of the acetyl group is complete. In general, this reaction will be conducted in the presence of a suitable solvent such as a lower alkanol. Preferably the starting material is dissolved in methanol and a stoichiometric excess of ammonium hydroxide is added. The reaction temperature is kept between 0° to 50°C, preferably at room temperature. After the reaction is complete (which can be determined by TLC), another solvent may be added to facilitate isolation of the de-protected product, such as ethyl ether which leads to precipitation of the de-acylated product which can be filtered off and isolated using conventional separation methods.

In general, when carrying out a process of this invention, those amino, hydroxy or carboxylic groups which are not to participate in the synthesis reaction must be protected until (1) either de-protection yields the final product; or (2) the presence of the unprotected group in the ensuing reaction steps leading to the final product would not modify the intended sequence of reactions. An example for meeting requirement (1) is the benzyloxycarbonyl group in the preparation of the final product of this invention, which protects the amino group of the valine function of ganciclovir until it is removed in the de-protection step. An example for meeting requirement (2) is the acetyl group, or the trityl or monomethoxytrityl group protecting the amino group of the guanine ring system of ganciclovir, as the unprotected amino group does not interfere with the esterification (step III).

In general, the qualification of potential blocking agents that render them suitable for use in the preparation of the compound of Formula I include:
(1) Their introduction should proceed quantitatively and smoothly without L-valine racemization;
(2) The blocked intermediate must be stable to conditions of the reactions employed until removal of the protecting group is required;
(3) The blocking group must be susceptible of being readily removed under conditions which do not change the chemical nature of the remainder of the molecule or result in racemization of the L-valine component.

### Silylation of Guanine

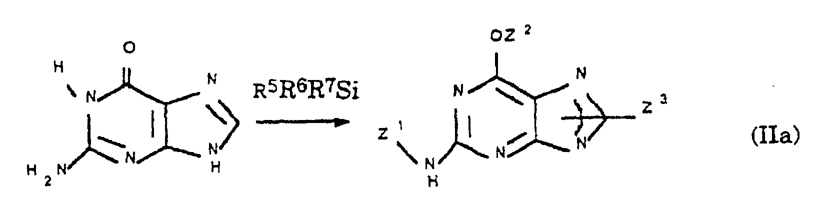

where Z¹, Z² and Z³ are independently hydrogen or a silyl protecting group of the formula R⁵R⁶R⁷Si, in which R⁵, R⁶, and R⁷ are independently lower alkyl, provided that at least one of Z¹, Z² and Z³ is a silyl group.

### Preparation of Silylated Guanine of Formula (IIa)

The trialkylsilyl halides of formula R⁵R⁶R⁷SiX (where X is chloro or bromo) or hexamethyldisilazane are commercially available.

As illustrated in the above reaction scheme, guanine is silylated to give the corresponding silylated compound of Formula (IIa).

The protection of guanine is well known in the art (see, for example "Synthesis of 9-substituted Guanines. A Review" by F.P. Clausen and J.J. Christensen, Org. Prep. Proced. Int., 25(4), pp 375-401 (1993)). Guanine may, for example, be protected using acyl groups, for example acetyl, or by silyl groups. Traditionally, when silyl groups are employed for protection, guanine is silylated in such a manner that all active protons present in guanine are replaced by a silyl group before proceeding with the desired reaction, i.e. guanine is protected as the trisilyl derivative. However, it has been found that, although trisilylation of guanine followed by the condensation of Step (a) gives the desired product in good yield, and indeed is preferred, it is not essential that guanine be trisilylated for the condensation carried out in Step (a) to be essentially specific for the preparation of compound (IV). Conventionally, guanine as a slurry is reacted with a silylating agent, for example hexamethyldisilazane, at reflux until all suspended material goes into solution, which signals the complete formation of the trisilyl derivative. This reaction can take up to 48 hours or more. It has been found that refluxing for much less time, for example as little as 2 hours, then reacting the slurry thus produced with a compound of Formula (III) as described in Step (a), gives good yields of desired product. This result is clearly advantageous, since less expense is involved in a shortened reaction time, and smaller amounts of silylating reagent are used. Although the composition of a compound of Formula (Ila) produced by reacting guanine with hexamethyldisilazane for a shortened period of time is not yet known with any certainty, it is believed to be mainly a monosilyl derivative, probably mixed with some disilyl and trisilyl guanine.

In one preferred method, guanine is reacted with about 3-10 molar equivalents of a silylating agent, preferably with hexamethyldisilazane (i.e. to give a compound of Formula (Ila) where R⁵, R⁶, and R⁷ are all methyl), in the presence of an silylation catalyst, preferably ammonium sulfate, trifluoromethanesulfonic acid, trimethylsilyltrifluoromethane sulfonate, or bistrimethylsilyl sulfonate, most preferably trifluoromethanesulfonic acid (about 0.01 to 0.1 molar equivalents). The mixture is heated to reflux over a period of about 5-24 hours, preferably about 16 hours. When the reaction is substantially complete, excess silylating agent is removed under reduced pressure, and the resultant solution of the protected guanine product of Formula (Ila) is used in the next step without further purification.

Alternatively, guanine is reacted with a silylating agent, preferably hexamethyldisilazane, in the presence of a silylating catalyst, preferably trifluoromethanesulfonic acid, as described in the preceding paragraph, but for a period of about 1-8 hours, preferably 2-4 hours. Optionally, excess silylating agent is removed under reduced pressure, and the resultant mixture of the protected guanine product of Formula (IIa) is used in the next step without further purification.

Alternatively, guanine may be reacted with 1-5 molar equivalents of a trialkylsilyl halide of formula SiR⁵R⁶R⁷X, in which R⁵, R⁶, and R⁷ are independently lower alkyl and X is chloro or bromo, such as trimethylsilyl chloride, tent-butyldimethylsilyl chloride, and the like, in the presence of about 1-5 molar equivalents of a base.

It should be noted that ammonium sulfate, trifluoromethanesulfonic acid, trimethylsilyltrifluoromethane sulfonate, or bistrimethylsilyl sulfonate work well as silylation catalysts in the silylation of guanine described above. However, use of trifluoromethanesulfonic acid is preferred because it is much less expensive than trimethylsilyltrifluoromethane sulfonate or bistrimethylsilyl sulfonate.

### Starting Materials

All starting materials employed to make the compound of Formula I are known, such as guanine and the protecting and carboxylic-group-activating reagents.

The glycerol derivatives of Formula III which are used in the condensation reaction with guanine or a protected guanine compound are described in copending European Patent Application Publication No. 694.547 and in European Patent Publication 187 297. European Patent Publication 187 297 also describes certain methods for preparing the glycerol derivatives of Formula III. A preferred method for preparing the glycerol derivatives is described below in the section "Preparation of Glycerol Derivatives", below.

A preferred guanine starting material is the unprotected guanine and preferred glycerol derivatives are 1-propionyloxy-2-propionyloxymethoxy-3-benzyloxypropane, 1-acetoxy-2-acetoxymethoxy-3-benzyloxypropane, or 1-benzyloxy-2-acetyloxymethoxy-3-benzyloxypropane.

Prior to carrying out Step II (esterification step), the amino group of the L-valine derivative must be protected to avoid its interference with the esterification by undesirable amide formation. The various amino-protected L-valine derivatives useful in this invention, such as N-benzyloxycarbonyl-L-valine, BOC-L-valine and FMOC-L-valine, N-formyl-L-valine and N-benzyloxycarbonyl-N-carboxy-L-valine anhydride, are all commercially available (SNPE Inc., Princeton, NJ, Aldrich Chemical Co., Milwaukee, WI, and Sigma Chemical Co., St. Louis, MO.), or are described in the literature, such as N-allyloxycarbonyl-L-valine. Cyclic amino-protected L-valine derivatives are also described in the literature, as noted above. Of particular interest forthe present invention is the benzyloxycarbonyl valine-substituted 2-oxa-4-aza-cycloalkane-1,3-dione (Z-valine-N-carboxyanhydride, or Z-Valine-NCA), which is also commercially available (SNPE Inc., Princeton, NJ). Alternatively, the protecting step may be carried out by conventional methods.

### Preparation of Glycerol Derivatives of Formula III:

The glycerol derivatives useful in this invention can be prepared from known starting materials. For example, the compounds of Formula III wherein Y¹ is lower aralkyloxy or halo, Y² is lower acyloxy or halo, and Z is lower acyloxy, can be prepared as described below. This reaction is exemplified by the preparation of the compounds wherein Y¹ is benzyloxy, Y² is propionyloxy and Z is propionyloxy, i.e., 1-benzyloxy-3-propionyloxy-2-(propionyloxy)methoxypropane.

Epichlorohydrin is reacted with benzyl alcohol in the presence of tetrabutylammonium bisulfate in aqueous sodium hydroxide, at room temperature. The product of this reaction, benzyl gycidyl ether, is isolated by conventional means and is then added slowly to a suspension of lithium chloride in tetrahydrofuran and acetic acid, at 40°-70°C, preferably below 60°C. The reaction mixture is allowed to cool to room temperature, and stirred for 2-10 hours, preferably 3-6 hours. The product is isolated by extraction, washed and dried to provide 1-benzyloxy-3-chloro-2-propanol. To this product is then added methoxymethyl propionate, which is prepared by adding propionic anhydride to dimethoxymethane in the presence of an ion exchange resin, e.g., Amberlyst 15, maintaining the temperature between 40°-60°C, preferably between 40°-50°C during the addition. The reaction mixture is aged and cooled, then filtered, washed and distilled. This product, methoxymethyl propionate is reacted with 1-benzyloxy-3-chloro-2-propanol in an aprotic solvent, e.g., hexanes, the presence of p-toluenesulfonic acid hydrate at reflux. Distillation and washing affords the product 1-benzyloxy-3-chloro-2-(propionyloxy)-methoxypropane. Finally, to prepare the compounds of Formula III, 1-benzyloxy-3-chloro-2-(propionyloxy)-methoxypropane, is refluxed with sodium propionate in an aprotic solvent, e.g., toluene, after which tetrabutylphosphonium chloride is added. The reaction mixture is stirred at 90°C to reflux temperature for 1-3 days, preferably 2 days, at which time more tetrabutylphosphonium chloride and solvent are added. The mixture is heated to reflux and the distillate removed, then stirred at 90°C to reflux temperature for 3-16 hours, preferably 5-10 hours, then cooled to ambient temperature. The mixture is then washed with water and brine, and the organic phase is separated and concentrated to yield 1-benzyloxy-3-propionyloxy-2-(propionyloxy)-methoxypropane. In an analogous manner, other glycerol derivatives of Formula III may be prepared.

### Preparation of Activated derivative of L-valine:

Prior to carrying out Step II (esterification step), L-valine must also be activated. At least 1 equivalent of the protected amino acid and 1 equivalent of a suitable coupling agent or dehydrating agent, for example 1,3-dicyclohexylcarbodiimide or salts of such diimides with basic groups should be employed from the start. Other carbodiimides such as N,N'-carbonyldiimidazole may also be used. Further useful dehydrating agents are trifluoroacetic anhydride, mixed anhydrides, acid chlorides, 1-benzotriazolyloxy-tris(dimethylamino)phosphonium hexafluorophosphate, benzotriazole-lyl-oxy-trispyrrolidinophosphonium hexafluorophosphate, 1-hydroxybenzotriazole, 1-hydroxy-4-azabenzotriazole, 1-hydroxy-7-azabenzotriazole, N-ethyl-N'-(3-(dimethylamino)-propyl)carbodiimide hydrochloride, 3-hydroxy-3,4-dihydro-4-oxo-1,2,3-benzotriazine, O-(benzotriazol-1-yl)-1,1,3,3-tetramethyluronium hexafluorophosphate, O-(7-azabenzotriazol-1-yl)-1,1,3,3-tetramethyluronium hexafluorophosphate, O-(7-azabenzotriazol-1-yl)-1,1,3,3-tetramethyluronium tetrafluoroborate, O-(1H-benzotriazol-1-yl)-1,1,3,3-bis(tetramethylene)uronium hexafluorophosphate or O-(7-azabenzotriazol-1-yl)-1,1,3,3-bis- (tetramethylene)uronium hexafluorophosphate. A description of these coupling agents by L. A. Carpino can be found in J. Am. Chem. Soc. 1993, 115, p. 4397-4398.

Also useful for this purpose are urethane-protected amino acid N-carboxy anhydrides (UNCA's) which are an activated form of an amino acid; these have been described by William D. Fuller et al., J. Am. Chem, Soc. 1990, 112, 7414-7416, which is incorporated herein by reference. Other protected amino acid N-carboxy anhydrides are described in PCT Patent Application WO 94/29311 discussed above. In summary, any other reagent that produces an anhydride or another activated derivative of the protected amino acid under mild conditions can be used as the coupling agent.

The amino-protected amino acid is dissolved in an inert solvent such as a halogenated lower alkane, preferably dichloromethane under an inert atmosphere, for example nitrogen, and the coupling agent is added (preferably 1,3-dicyclohexylcarbodiimide). The reaction mixture is stirred at temperatures between O° and 50°C, preferably at about room temperature. The reaction mixture is filtered and the reaction product (the anhydride of the protected amino acid) isolated. The resulting product is dissolved in a dry inert solvent such as dry dichloromethane and placed under nitrogen.

### Preparation of Mono-L-valine Ganciclovir

### Step I:

The reaction conditions for the condensation of guanine with the 2-amino group optionally protected, are described in European Patent Publication 187 297. In this condensation reaction, guanine is reacted with a glycerol derivative of Formula (III) in an aprotic hydrocarbon solvent (such as benzene or toluene, or xylenes) or dimethylformamide with a hexa-lower alkyl(di)silazane, for example, hexamethyldisilazane, hexaethyldisilazane, or the like, and a catalyst at temperatures between 30°C and reflux temperature. The catalyst is a Lewis acid salt, such as trialkyl silyl salt (such as the sulfate), or a trifluoroalkyl sulfonic acid, a chlorosilane, or ammonium sulfate and pyridine. For a more detailed disclosure of the reaction conditions for condensation step I see the disclosure of European Patent Publication 187 297 which is incorporated by reference herein. The resulting compound is a ganciclovir derivative with protected hydroxy groups and with an optionally protected 2-amino group.

For example, a ganciclovir intermediate of Formula TV, where Y¹ is lower acyloxy and Y² is benzyloxy, can be prepared by condensing persilyl guanine with a glycerol derivative of Formula III where Y¹ and Z are lower acyloxy and Y² is benzyloxy. Typically, persilyl guanine is treated with a large excess of a glycerol derivative of Formula III in the presence of a catalytic amount of a Lewis acid salt, preferably trifluoromethane sulfonic acid at 60°-150°C preferably 120°-130°C for 3-24 hours, preferably 6-8 hours. The mixture is cooled, diluted with an aprotic nonpolar solvent, preferably toluene and then water is added carefully. The product can optionally be isolated by filtration.

### Step II:

The protected ganciclovir derivative from Step I is partially de-protected to provide ganciclovir with the 2-amino group optionally in protected form and one protected primary hydroxyl function. Preferably, the primary hydroxyl function is protected with a benzyl group. Suitable amino-protecting groups are lower alkanoyl groups with 2 to 4 carbon atoms, in particular the acetyl or propionyl group. Other suitable amino-protecting groups are the trityl or substituted trityl groups, such as the monomethoxytrityl group, and the 4,4'-dimethoxytrityl group.

As noted above, the acid addition salt of the compound of Formula V, can be prepared directly from the product of Step I, which is the di-hydroxy protected compound of Formula TV, by de-protecting one of the hydroxy-moieties with concomitant preparation of the salt. Alternatively, the compound of Formula IV can first be deprotected at one of the hydroxy moieties to provide the mono-hydroxy protected ganciclovir, from which the acid addition salt is then prepared. Also, from the compound of Formula IV, the intermediate with protection at both hydroxy moieties as well as at the 2-amino guanine group can first be prepared, with, for example, an acyl anhydride. From this intermediate, the novel mono-hydroxy protected ganciclovir as an acid addition salt (Formula V) can be prepared. For example, the dipropionyl monobenzyl ganciclovir intermediate is prepared from the propionyl monobenzyl ganciclovir intermediate of Formula IV by reaction with propionic anhydride/dimethylaminopyridine, in, for example, toluene. As discussed above, the ganciclovir intermediate with protection at both hydroxy moieties and at the 2-amino guanine group, such as dipropionyl monobenzyl ganciclovir, is a preferred intermediate because it can be isolated substantially free of the undesired 7-isomer of guanine.

When both Y¹ and Y² are both aralkyloxy, for example, benzyloxy, then deprotection occurs by hydrogenolysis under conventional hydrogenation conditions; when one of the groups Y¹ or Y² is acyloxy or halo, said group is selectively removed by basic hydrolysis.

Transfer hydrogenation conditions can also be employed: a palladium catalyst such as palladium hydroxide is used in a suitable solvent such as cyclohexene A cosolvent such as ethanol or isopropanol may be necessary for better solubility of the adduct.

Hydrogenolysis is preferably carried out by dissolving the protected ganciclovir in a solvent system under conventional hydrogenation conditions at elevated pressure of 5-100 psi (0.35-7 atm), preferably 10-40 psi (0.7-2.8 atm) hydrogen, in the presence of a catalyst such as a palladium compound, in particular palladium hydroxide on carbon (Pearlman's catalyst), at about 20°-60°C, preferably 20°-35°C, until completion of the reaction. Other suitable hydrogenation catalysts include hydrogenation catalysts in general such as Pd, Pd on carbon and homogeneous hydrogenation catalysts. The solvent system includes a lower alkanol such as methanol orethanol. Generally, the reaction will be carried out at temperatures between room temperature and the reflux temperature of the solvent system, for example, in refluxing ethanol under a hydrogen atmosphere and under exclusion of air. The reaction vessel is preferably swept with nitrogen before charging it with hydrogen. The catalyst will be recovered by filtration. The filtrate can be reduced in volume by evaporation of excess solvent. The resulting crude reaction mixture generally includes unchanged starting material and 2-amino-protected ganciclovir with one aliphatic hydroxy group protected as the major products. The separation of these two products is usually performed by isolation procedures known in the art, often by chromatographic methods, preferably on silica gel, followed by elution with appropriate eluents such as mixtures of a lower alkanol with a halogenated lower alkane (preferably ethanol and dichloromethane) to give 2-amino-protected ganciclovir with one aliphatic hydroxy group protected. This ganciclovir intermediate can then be isolated as the salt compound of Formula V by conventional methods, using, for example, hydrogen chloride and a solvent, such as methanol.

The hydrolysis reaction to remove an acyl hydroxy-protecting group is preferably carried out by treating the protected ganciclovir under basic hydrolysis conditions. The hydrolysis medium may include a lower alkyl alcohol such as methanol or ethanol, toluene, and aqueous sodium hydroxide. Generally the reaction will be carried out at temperatures between room temperature and the reflux temperature of the solvent system. Again, this ganciclovir intermediate can be isolated as the salt compound of Formula V as described above.

For example, the product obtained in Step I can be partially deprotected by removing the lower acyl group (of the group Y¹) with base. Afterthe reaction described in Step I is complete and the reaction mixture has been cooled and diluted with, preferably methanol, aqueous sodium hydroxide is added. The mixture is heated to 40°-90°C, preferably 60°-80°C, until the reaction is complete. The reaction mixture is then carefully acidified with hydrochloric acid. The product is collected as the hydrochloride by filtration, then washed and dried.

### Step III:

In this step an activated derivative of amino-protected L-valine of the Formula VI or VIa is esterified with the mono-hydroxy protected ganciclovir salt derivative of Formula V obtained in Step II. Suitable amino-protecting groups for the L-valine derivative are the N-benzyloxycarbonyl group, the phthalyl group, the tertiary butyloxycarbonyl group and the N-(9-fluorenyl- methoxycarbonyl) or "FMOC" group.

A suspension of the product of Step II (the compound of Formula VI) in an aprotic solvent (preferably dimethylformamide) containing an organic base (preferably TEA) is added to an approximately equivalent amount of the activated L-valine derivative in an aprotic solvent (preferably dimethylformamide). The activated L-valine derivative is preferably Z-valine-N-carboxyanhydride or L-valine anhydride. The reaction mixture is stirred at 0°-40°C., preferably at 4°-10°C, for 1-5 hours. The reaction mixture is diluted with water, preferably toluene and water. The precipitate is collected by filtration, washed and dried at ambient temperature.

### Step IV (Final De-protection to Give the Product of Formula I) :

The valine protecting groups of the product of Step III, the hydroxy protecting group Y² and optionally any 2-amino guanine protecting groups are removed by deprotection reactions, preferably in an acidic medium or solvent, most preferably by hydrogenation. De-protection under acidic conditions is preferred, as this will ensure that the amino group liberated in the de-protection reaction will be protonated; that is, that the base of Formula I as it is formed in the de-protection reaction will be captured by an at least stoichiometric amount of acid present. Isolating the compound of Formula I as an acid addition saltwill protectthe desired stereoconfiguration of the compound of Formula I. Therefore, those examples given below that show the deprotection step also show the concomitant salt formation step.

The de-protection reaction is carried by dissolving the product of the esterification step in an inert solvent, preferably in an acidic solvent, using a hydrogenation catalyst, such as palladium on carbon, or palladium hydroxide on carbon (Pearlman's catalyst), using elevated hydrogen pressure between 1 and 2000 psi (0.07-140 atm), preferably 20 to 200 psi (1.4-14 atm). The completion of the reaction can be monitored using conventional TLC analysis. The hydrogenolysis is continued until the conversion is complete, if required with addition of further hydrogenation catalyst. The catalyst is removed and washed. The combined filtrates from filtration and the washings are concentrated and lyophilized to isolate ganciclovir L-valine ester. The purification of the product and the isolation of a crystalline ester is carried out by recrystallization or other purification techniques, such as liquid chromatographic techniques.

The hydrogenolysis may be slow due to the presence of impurities (catalyst poisons) in the starting material. It has been found to be advantageous to treat the starting material prior to hydrogenolysis in methanol with filtering aids commercially available such as catalytic Filtrol® (strongly acidic activated clay), Solka Floc® (ground cellulose) and activated carbon such as ADP carbon. This effectively removes most catalyst poisons.

If the tertiary butyloxycarbonyl group is being used as amino-protecting group, its removal is effected with acid, such as HCl and isopropanol as a solvent or with trifluoroacetic acid neat.

Alternatively if the esterification step has been carried out with a trityl or substituted trityl-protected ganciclovir derivative such protecting groups can be removed by treatment with an aqueous alkanoic acid or trifluoroacetic or hydrochloric acid at temperatures between -20°C and 100°C, for example, aqueous acetic acid. Preparation of Salts

One of ordinary skill in the art will also recognize that the compound of Formula I may be prepared either as an acid addition salt or as the corresponding free base. If prepared as an acid addition salt, the compound can be converted to the free base by treatment with a suitable base such as ammonium hydroxide solution, sodium hydroxide, potassium hydroxide or the like. However, it is important to point out that the free base of Formula I is more difficult to characterize than its acid addition salts. When converting the free base to an acid addition salt, the compound is reacted with a suitable organic or inorganic acid (described earlier). These reactions are effected by treatment with an at least stoichiometric amount of an appropriate acid (in case of the preparation of an acid addition salt) or base (in case of liberation of the free compound of Formula I). In the salt-forming step of this invention typically, the free base is dissolved in a polar solvent such as water or a lower alkanol (preferably isopropanol) and mixtures thereof and the acid is added in the required amount in water or in lower alkanol. The reaction temperature is usually kept at about 0 to 50°C, preferably at about room temperature. The corresponding salt precipitates spontaneously or can be brought out of the solution by the addition of a less polar solvent, removal of the solvent by evaporation or in a vacuum, or by cooling the solution.

### Isolation of Stereoisomers and the Manufacture of Crystalline 2-(2-Amino-1,6-dihydro-6-oxo-purin-9-yl)methoxy-3-hydroxy-1-propyl-L-valinate

From the Formula (I) it is apparent that the compound of the invention has one asymmetric carbon atom (chiral center) in the propyl chain, in addition to the asymmetric carbon atom in L-valine. Therefore, two diastereomeric forms exist, the (R)- and (S)-form as determined by the rules of Cahn et al. Suitable methods for the separation of the diastereomers are described in European Patent Application Publication No. 694.547, incorporated herein by reference.

The compounds of Formula (I) may also be prepared in crystalline form, which has many well-known advantages overthe non-crystalline form. Suitable methods forthe preparation ofthe compounds of the invention in crystalline form are also described in U.S. Patent Application Serial No. 281,893, incorporated herein by reference.

The following preparations and examples are given to enable those skilled in the art to more clearly understand and to practice the present invention. They should not be considered as limiting the scope of the invention, but merely as being illustrative and representative thereof.

### EXAMPLE 1

### 1A. Preparation of 2-(2-amino-1,6-dihydro-6-oxo-purin-9-yl)-methoxy-3-benzyloxy-propyl-1-propionate

Trifluoromethane sulfonic acid (0.5ml) was added to guanine (25g) and the mixture was briefly agitated. Hexamethyldisilazane (HMDS) (125ml) was added and the mixture was heated to reflux until solution was achieved. The solution was vacuumed distilled to remove excess HMDS. The residue was cooled and more trifluoromethane sulfonic acid (0.4ml) was added followed by 1-propionyloxy-2-propionyloxymethoxy-3-benzyloxypropane (70g). The mixture was heated at 110°-130°C for several hours until little or no guanine was detected by HPLC. The mixture was cooled and diluted with toluene (150ml) and methanol (21 ml). Water (20ml) was added carefully and the mixture was then cooled. Propionyl monobenzyl ganciclovir (29g) was collected by filtration, washed with toluene and water and was dried.

### 1B. Preparation of 2-(2-amino-1,6-dihydro-6-oxo-purin-9-yl)-methoxy-3-benzyloxy-propy1-1-acetate

Trifluoromethane sulfonic acid (0.5ml) was added to guanine (25g) and the mixture was briefly agitated. Hexamethyldisilazane (HMDS) (125ml) was added and the mixture was heated to reflux until solution was achieved. The solution was vacuumed distilled to remove excess HMDS. The residue was cooled and more trifluoromethane sulfonic acid (0.4ml) was added followed by 1-acetoxy-2-acetoxymethoxy-3-benzyloxypropane (65g). The mixture was heated at 110°-130°C for several hours until little or no guanine was detected by HPLC. The mixture was cooled and diluted with toluene (75ml). Water (25ml) was added carefully and the mixture was then cooled. Acetyl monobenzyl ganciclovir (38g) was collected by filtration, washed with toluene and water and was dried.

### 1C. Preparation of 2-(2-acetyl-amino-1,6-dihydro-6-oxo-purin-9-yl)-methoxy-1,3-dibenzyloxy-propane

In a completely analogous manner to that described in Examples 1A and 1B, 2-(2-acetyl-amino-1,6-dihydro-6-oxo-purin-9-yl)methoxy-1,3-dibenzyloxy-propane was prepared using 1-benzyloxy-2-acetyloxymethoxy-3-benzyloxypropane as the glycerol reagent and 2-N-acetyl-guanine.

### EXAMPLE 2

### Preparation of 2-(2-amino-1,6-dihydro-6-oxo-purin-9-yl)-methoxy-3-benzyloxy-propan-1-ol hydrochloride

2A. The preparation of the mono-protected ganciclovir intermediate as a salt (the compound of Formula V) was prepared directly from the product of Example 1A as follows:
   Monobenzyl ganciclovir hydrochloride was isolated as the product of the procedure described in Example 1A by using the following modification. After the reaction was complete and was cooled and diluted with methanol (250ml), NaOH (23g) was added. The mixture was heated with good agitation. When hydrolysis was judged complete (HPLC, tlc), the mixture was cooled and conc. hydrochloric acid (45.2g) added. The mixture was filtered and the filtrate diluted with ethyl acetate (240ml). The mixture was cooled and the product collected, washed with ethyl acetate and dried to yield 30.0g.
2B. Similarly, monobenzyl ganciclovir hydrochloride was prepared from acetylmonobenzyl ganciclovir (the product of Example 1 B) by heating a mixture of sodium hydroxide (10.0g), methanol (150ml) and acetylmonobenzyl ganciclovir (49g) until the reaction was complete. The solution was acidified with hydrochloric acid (31g) and the mixture was filtered. The filtrate was diluted with ethyl acetate (750ml) and cooled. The product was collected by filtration, washed with ethyl acetate and dried to yield 47g.

### EXAMPLE 3

### Preparation of 2-(2-amino-1,6-dihydro-6-oxo-purin-9-yl)-methoxy-3-benzyloxy-propan-1-ol hydrochloride

3A. The preparation of the mono-protected ganciclovir intermediate as a salt (the compound of Formula V) was also prepared via the non-salt intermediate (2-(2-amino-1,6-dihydro-6-oxo-purin-9-yl)methoxy-3-benzyloxypropan-1-ol, or monobenzyl ganciclovir as follows:
   Monobenzyl ganciclovir was isolated as the product of the procedure described in Example 1A by using the following modification. After the reaction was complete and was cooled and diluted with toluene (25ml), a solution of NaOH (25g) in water (125ml) was added. The mixture was heated with good agitation. When hydrolysis was judged complete (HPLC, tlc), the lower aqueous layer was slowly added to a hot mixture of acetone (125ml), acetic acid (25g) and water (25ml) with good agitation. The mixture was cooled and monobenzyl ganciclovir isolated by filtration, washed with aqueous acetone and dried.

   Next, monobenzyl ganciclovir hydrochloride was prepared from monobenzyl ganciclovir (17g) by mixing with conc. hydrochloric acid (5ml) and methanol (80ml) and warming until all solid dissolves. The solution was diluted with ethyl acetate (160ml) and cooled. The product was collected by filtration, washed with ethyl acetate and dried, to yield 18.1g.
   While a preferred solvent for preparing monobenzyl ganciclovir hydrochloride can be prepared from monobenzyl ganciclovir is methanol, other solvents can be used in an analogous manner. Such other solvents include isopropanol, ethanol and butanol.
3B. Alternatively, monobenzyl ganciclovir and monobenzyl ganciclovir hydrochloride were prepared from the product of Example 1 B as follows:
   Monobenzyl ganciclovir was isolated as the product of the procedure described in Example 1 B by using the following modification. After the reaction was complete and was cooled and diluted with toluene (25ml), a solution of NaOH (25g) in water (125ml) was added. The mixture was heated with good agitation. When hydrolysis was judged complete (HPLC, tlc), the lower aqueous layer was slowly added to a hot mixture of acetone (125ml), acetic acid (25g) and water (25ml) with good agitation. The mixture was cooled and monobenzyl ganciclovir isolated by filtration, washed with aqueous acetone and dried to yield 41g.

   Monobenzyl ganciclovir HCl was then prepared from monobenzyl ganciclovir in a manner similar to that described in Example 3A, above.
3C. Alternatively, monobenzyl ganciclovir and monobenzyl ganciclovir hydrochloride were prepared from the product of Example 1 C as follows. In this example, the product of Example 1C is a 2-amino protected dibenzyl ganciclovir intermediate of Formula IV:
   First, N-acetyl-dibenzyl-ganciclovir was converted to N-acetyl-monobenzyl-ganciclovir. N-acetyl-dibenzyl-ganciclovir (14.5 kg) was charged to a 200 liter glass reactor along with 60.1 kg methanol, and 900 g of Pearlman's catalyst. This mixture was placed under a hydrogen atmosphere and heated to 40°C for 11 hours. The catalyst was removed by filtration through a Solka Floc cake. This cake was washed with 60 Kg of methanol. Methanol (60 kg) was distilled from the solution of N-acetyl-dibenzyl-ganciclovir and N-acetyl-monobenzyl-ganciclovir. Water (113 kg) was added to this concentrated methanol solution. This mixture was cooled to 5°C overnight. The N-acetyl-dibenzyl-ganciclovir was then removed by filtration and washed with 140 l of (6:4) methanol/water. The methanol/ water solutions were combined and methanol/ water was distilled under vacuum to a jacket temperature of 115°C, 27 ins (685.8 mm) of Hg, and a pot temperature of 44°C, until 260 kg of methanol/ water had distilled. The resulting aqueous layer was extracted 3 X 100 kg dichloromethane (each dichloromethane extraction contained 3.75 l methanol.) The dichloromethane layers were combined and the dichloromethane/ethanol was removed by atmospheric distillation to a pot temperature of 40°C. Acetone (7.3 l) was added to the pot residue and the pot was heated to 50°C with agitation. This heterogeneous mixture was cooled to 5°C overnight. The solid was filtered out and washed with 15 l (-5°C to -10°C) acetone. Dried solid in a vacuum oven (∼50°C, 25 ins of Hg, nitrogen sweep) for 24 hours. Mass: 3.425 kg N-acetyl monobenzyl-ganciclovir. Isolated yield 29 %. HPLC: 91.7% N-acetyl-monobenzyl ganciclovir, 2.3% monobenzyl ganciclovir, 0.3% N-acetyl-ganciclovir.

Ammonolysis of N-acetyl-monobenzyl ganciclovir to monobenzyl-ganciclovir: To 103 g N-acetyl-monobenzyl-ganciclovir was added 500 ml methanol and 100 ml 30% NH₄OH in water. The reaction was complete by TLC in about 22 hours. The methanol was evaporated from the heterogeneous mixture to a temperature of 40°C, at 28 ins of Hg. The aqueous solution was cooled to room temperature, and then filtered. The solid was washed with 500 ml water and dried in a vacuum oven (∼50°C, 25 ins of Hg, nitrogen sweep) overnight. Weight: 94.1 g. HPLC: 95.5% monobenzyl ganciclovir.

Monobenzyl ganciclovir HCl was then prepared from monobenzyl ganciclovir in a manner similar to that described in Example 3A, above.

### EXAMPLE 4

### Preparation of 2-(2-amino-1,6-dihydro-6-oxo-purin-9-yl)-methoxy-3-benzyloxy-propan-1-ol hydrochloride

4A. The preparation of the mono-protected ganciclovir intermediate as a salt (the compound of Formula V) was also prepared via a 2-amino protected intermediate 2-(2-propionyl-amino-1,6-dihydro-6-oxo-purin-9-yl)-methoxy-3-benzyloxy-propyl-1-propionate as follows:
   Dipropionylmonobenzyl ganciclovir was isolated as the product of the procedure described in Example 1A by using the following modification. After the reaction was complete and was cooled a solution of 4-dimethylaminopyridine (1.6g) in propionic anhydride (31 g) was added and the mixture was heated until the acylation was complete (HPLC, tlc). Water (8.5g) was added and the hot mixture was extracted with hexane (160ml) or a hexane (160ml) /toluene (80ml) mixture. The lower layer of the mixture was separated and diluted with toluene (150ml). The hot solution was washed with water (1x25ml, 1x75ml), diluted with ethyl acetate (15ml), and again washed with water (75ml). The organic layer was cooled and stirred. The product was collected by filtration, washed with toluene and dried to yield 43g.

   Monobenzyl ganciclovir hydrochloride was prepared from dipropionylmonobenzyl ganciclovir by heating a mixture of sodium hydroxide (20.0g), methanol (400ml) and dipropionylmonobenzyl ganciclovir (112g) until the reaction was complete. The solution was acidified with hydrochloric acid (73.5g) and the mixture was filtered. The filtrate was diluted with ethyl acetate (800ml) and cooled. The product was collected by filtration, washed with ethyl acetate and dried to yield 76.7g monobenzyl ganciclovir hydrochloride.
4B. Monobenzyl ganciclovir can also be prepared from dipropionylmonobenzyl ganciclovir as follows. A mixture of sodium hydroxide (7g), water (80ml) and dipropionylmonobenzyl ganciclovir (22.9g) is heated until the reaction is complete. The mixture is added to a mixture of acetic acid (10g) and water (20ml) and is then cooled. The product is collected by filtration, washed with water and dried to yield 17.1g.

### EXAMPLE 5

### Preparation of 2-(2-amino-1,6-dihydro-6-oxo-purin-9-yl)-methoxy-3-benzyloxy-1-propyl-N-(benzyloxycarbonyl)-L-valinate

5A. N-CBZ-monovalinate-monobenzyl-ganciclovir (CBZ = carbobenzyloxy = benzyloxycarbonyl, normally abbreviated Z) can be prepared from monobenzyl ganciclovir by adding a solution of CBZ-L-valine-N-carboxyanhydride (2.0g) in dimethylformamide (2ml) to a mixture of triethylamine (0.2g), dimethylformamide (2ml), and monobenzyl ganciclovir (2.0g). The mixture is then diluted with more triethylamine (0.2g), toluene (2.4ml) and water (8ml) and is vigorously stirred to initiate crystallization. More water (8ml) is added and the mixture is cooled. The product is collected by filtration, washed with water and dried, to yield 3.1g.
5B. Alternatively, N-CBZ-monovalinate-monobenzyl-ganciclovir can be prepared from monobenzyl ganciclovir by adding a solution of CBZ-L- valine anhydride in dimethylformamide (50ml) to a mixture of 4-dimethylaminopyridine (3.8g), dimethylformamide (50ml), and monobenzyl ganciclovir (47.0g). The anhydride is prepared by adding a solution of dicyclohexylcarbodiimide (36.0) to a stirring mixture of CBZ-L-valine (97.2g) and ethyl acetate (280ml). The mixture is stirred overnight, is filtered and the cake washed with ethyl acetate (150ml). The filtrate is stripped and the residue dissolved in dimethylformamide and used as described above. Upon reaction completion, the mixture is then diluted with triethylamine (20g), toluene (50ml) and water 200ml) and is vigorously stirred to initiate crystallization. More water (200ml) is added and the mixture is cooled. The product is collected by filtration, washed with water and dried, to yield 87.4g.
5C. N-CBZ-monovalinate-monobenzyl-ganciclovir can be prepared from monobenzyl ganciclovir hydrochloride as follows. To a mechanically stirred suspension of O-monobenzyl-ganciclovir HCl (25.0 g, 66.8 mmoles) in dimethylformamide (23 ml) at 4-7°C under an atmosphere of nitrogen, was added triethylamine (7.4 g, 87 mmoles) at such a rate that the temperature of the slurry did not exceed 8°C. Once the addition was finished, the slurry was stirred at 4-6°C while a solution of Z-Valine-NCA (24.0 g, 86 mmoles) in dimethylformamide (23 ml) was added dropwise. After the addition was finished, the ice bath was removed and the mixture was allowed to come to room temperature (23-25°C, approximately 30-45 minutes). Assay of the mixture by tlc (80:10:8 CH₃CN:CH₃COOH: H₂O) showed the reaction to be complete after this period of time. Successive addition to the mixture of triethylamine (2.2 g, 21.7 mmoles) toluene (17.5 ml) and water (20 ml) at 23-25°C was followed by heating of the mixture to 40-46°C. The mixture was treated dropwise with additional water (80 ml) and then slowly cooled to 23-25°C over a period of 2 hours. To the moderately vigorously stirred mixture was added water (100 ml) over a period of 10-15 minutes. The solid so formed was allowed to stir for a period of 10-15 minutes and then collected by filtration. The filtercake was washed with 2 portions of water (50 ml each) and air dried for 3 hours. Residual toluene was removed in vacuo at 35-40°C. Yield: 39.3 g (100%).
5D. N-CBZ-monovalinate-monobenzyl-ganciclovir can also be prepared advantageously in superior purity from monobenzyl ganciclovir hydrochloride as follows: CBZ-valine-NCA (1.15 equivalents) is dissolved in ethyl acetate and added to a slurry of monobenzyl ganciclovir (1.0 equivalent) in the presence of 4-dimethylaminopyridine (3% by weight) in dimethylformamide (DMF) and ehtyl acetate at 23°-27°C. After the reaction mixture has been stirred for about 3 hours the mixture is analyzed by HPLC for progress of the reaction. Stirring of the reaction mixture is continued until the reaction is judged essentially complete. Water is added to quench the reaction and ethyl acetate is added to dilute the mixture. The organic phase is separated and the aqueous phase is again extracted with ethyl acetate. The combined ethyl acetate solution is washed twice with water, treated with activated carbon such as PWA carbon at 35°-40°C and then filtered and azeotropically dried and concentrated to a premarkrd volume. Hexane is slowly added at 89°C and the resulting mixture is slowly cooled to 25°C to crystallize the product. The mother liquor is removed by decantation and the product is washed twice with an ethyl acetate/hexane (4/3) solution and once with hexane. The ethyl acetate/hexane and hexane washes are removed by decantation. The pure product is isolated by filtration and dried at <45°.

### EXAMPLE 6

### Preparation of 2-(2-amino-1,6-dihydro-6-oxo-purin-9-yl)-methoxy-3-hydroxy-1-propyl-L-valinate hydrochloride

Ganciclovir-L-valinate hydrochloride was prepared from N-CBZ-monovalinate-monobenzyl-ganciclovir as follows. A solution of the starting material (14.2g) in methanol (100ml) and conc. hydrochloric acid (2.7g) was hydrogenated over palladium hydroxide on carbon (Pearlman's catalyst) (2.7g). When the reaction was complete the mixture was filtered and the filtrate was vacuumed stripped to a low volume. Water (9g) was added and the solution again stripped to remove residual methanol. Isopropanol (35ml) was added and the mixture was stirred vigorously to initiate crystallization. More isopropanol (55ml) was added and the mixture was stirred and cooled. The product was collected by filtration, washed with isopropanol and dried to yield 8.0g; MS: 355 (MH)⁺.

## Claims

1. A process for preparing the compound 2-(2-amino-1,6-dihydro-6-oxo-purin-9-yl)-methoxy-3-hydroxy-1-propyl-L-valinate or a pharmaceutically acceptable salt or diastereomers thereof which process comprises:
a) condensation of a guanine of the formula 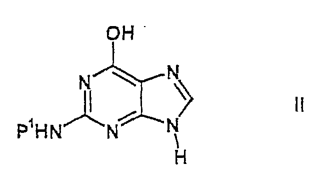 optionally in persilylated form, wherein P¹ is hydrogen or an amino-protecting group, with a 2-substituted glycerol derivative of the formula 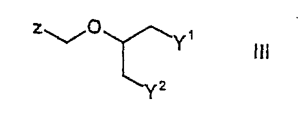 wherein Y¹ and Y² independently are halo, lower acyloxy, or an optionally substituted aralkyloxy group, and Z is a leaving group selected from lower acyloxy, methoxy isopropyl, benzyloxy, halo, mesyloxy or tosyloxy, and the like, optionally in the presence of a Lewis acid catalyst, to provide a compound of the formula 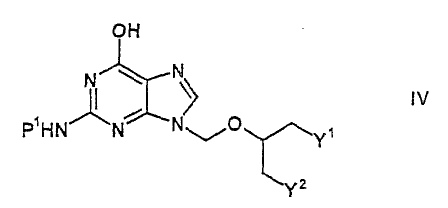 wherein P¹, Y¹ and Y² are as defined above;
(b) removal of one of Y¹ or Y² by hydrogenolysis, when both Y¹ and Y² are aralkyloxy, or by basic hydrolysis if one of Y¹ or Y² is acyloxy or halo, with subsequent or concomitant conversion into an acid addition salt thereof;
(c) esterification of the product of step (b), with an activated derivative of L-valine;
(d) optionally removal of an amino- and/or hydroxy-protecting group from a compound with the formula 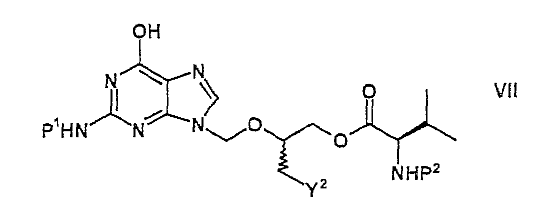 wherein P¹ is a hydroxy-protecting group or hydrogen, P² is an amino-protecting group, and Y² is as defined above, to afford the compound 2-(2-amino-1,6-dihydro-6-oxo-purin-9-yl)-methoxy-3-hydroxy-1-propyl-L-valinate or a pharmaceutically acceptable salt thereof;
(e) optionally converting the compound 2-(2-amino-1,6-dihydro-6-oxo-purin-9-yl)-methoxy-3-hydroxy-1-propyl-L-valinate into a pharmaceutically acceptable salt thereof;
(f) optionally converting the acid addition salt of the compound 2-(2-amino-1,6-dihydro-6-oxo-purin-9-yl)-methoxy-3-hydroxy-1-propyl-L-valinate to a non-salt form; or
(g) optionally diastereoisomerically separating 2-(2-amino-1,6-dihydro-6-oxo-purin-9-yl)-methoxy-3-hydroxy-1-propyl-L-valinate into its (R) and (S) diastereoisomers.

2. The process of claim 1, wherein the activated derivative of L-valine is Z-valine-N-carboxyanhydride.

3. The process of claim 1, wherein the glycerol derivative is 1-propionyloxy-2-propionyloxymethoxy-3-benzyloxypropane, 1-acetoxy-2-acetoxymethoxy-3-benzyloxypropane or 1-benzyloxy-2-acetyloxymethoxy-3-benzyloxypropane.

4. The process of claim 1, wherein the product of step (a) is further treated with an acyl anhydride of 1-4 carbon atoms, preferably propionic anhydride or acetic anhydride.

5. A compound of the formula 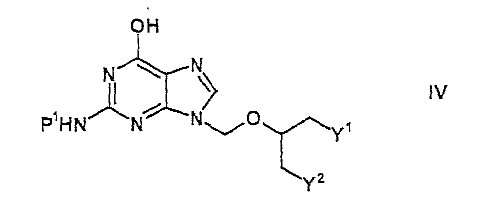 wherein P¹ is propionyl, Y¹ is benzyloxy and Y² is propionyloxy.

6. A process for preparing the compound of claim 5, which process comprises:
(a) condensation of a guanine of the formula 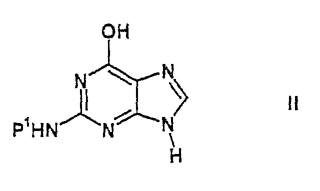 optionally in persilylated form, wherein P¹ is hydrogen, with a 2-substituted glycerol derivative of the formula 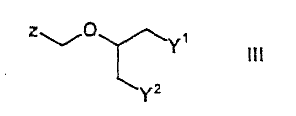 wherein Y¹ is benzyloxy, Y² is propionyloxy, and Z is a leaving group selected from lower acyloxy, methoxy isopropyl, benzyloxy, halo, mesyloxy or tosyloxy, and the like, optionally in the presence of a Lewis acid catalyst; and
(b) the product of step (a) is treated with propionic anhydride.

7. A compound of the formula 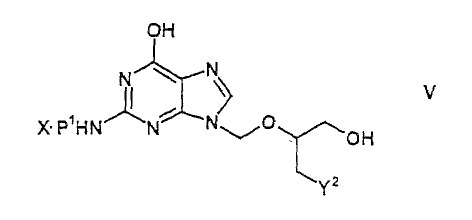 wherein X is a salt forming group and Y² is halo, lower acyloxy, lower alkyloxy, or an optionally substituted aralkyloxy group and P¹ is hydrogen or an amino protecting-group.

8. A process for preparing the compound of claim 7, which process comprises:
(a) condensation of a guanine of the formula 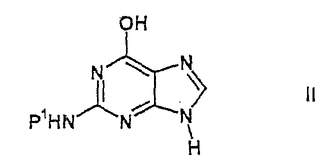 optionally in persilylated form, wherein P¹ is hydrogen or an amino-protecting group, with an 2-substituted glycerol derivative of the formula 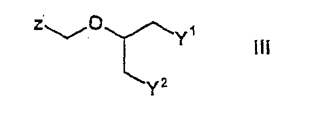 wherein Y¹ and Y² independently are halo, lower acyloxy, or an optionally substituted aralkyloxy group and Z is a leaving group selected from lower acyloxy, methoxy isopropyl, benzyloxy, halo, mesyloxy or tosyloxy, and the like, optionally in the presence of a Lewis acid catalyst, to provide the compound 2-(2-amino-1,6-dihydro-6-oxo-purin-9-yl)-methoxy-3-hydroxy-1-propyl-L-valinate;
(b) removal of one of Y¹ or Y² by hydrogenolysis, when both Y¹ and Y² are aralkyloxy, or by basic hydrolysis if one of Y¹ or Y² is acyloxy or halo, and conversion into an acid addition salt thereof.

## Patentansprüche

1. Verfahren zur Herstellung der Verbindung 2-(2-Amino-1,6-dihydro-6-oxo-purin-9-yl)-methoxy-3-hydroxy-1-propyl-L-valinat oder eines pharmazeutisch verträglichen Salzes oder Diastereomeren davon, wobei das Verfahren umfasst:
a) Kondensation eines Guanins der Formel 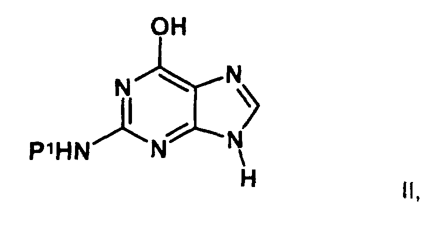 gegebenenfalls in persilylierter Form, worin P¹ Wasserstoff oder eine Aminoschutzgruppe darstellt, mit einem 2-substituierten Glycerin-Derivat der Formel 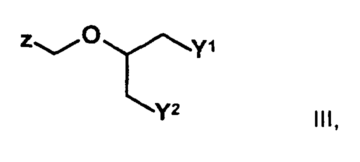 worin Y¹ und Y² unabhängig Halogen, Niederacyloxy oder eine gegebenenfalls substituierte Aralkyloxygruppe darstellen und Z eine Abgangsgruppe, ausgewählt aus Niederacyloxy, Methoxyisopropyl, Benzyloxy, Halogen, Mesyloxy oder Tosyloxy und dergleichen, darstellt, gegebenenfalls in Gegenwart eines Lewissäurekatalysators, zur Bereitstellung einer Verbindung der Formel 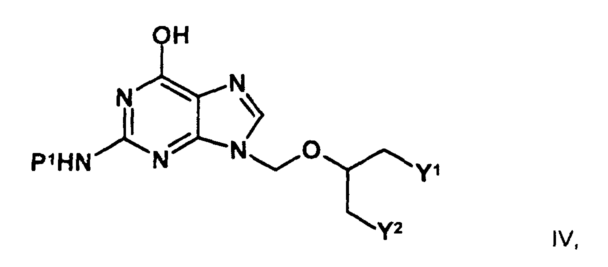 worin P¹, Y¹ und Y² wie vorstehend definiert sind;
(b) Entfernen von einem von Y¹ oder Y² durch Hydrogenolyse, wenn sowohl Y¹ als auch Y² Aralkyloxy darstellen oder durch basische Hydrolyse, wenn einer von Y¹ oder Y² Acyloxy oder Halogen darstellt, mit anschließender oder gleichzeitiger Umwandlung in ein Säureadditionssalz davon;
(c) Veresterung des Produkts von Schritt (b) mit einem aktivierten Derivat von L-Valin;
(d) gegebenenfalls Entfernen einer Amino- und/oder Hydroxyschutzgruppe aus einer Verbindung der Formel 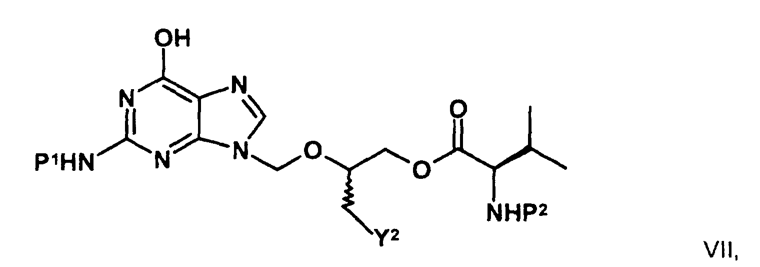 worin P¹ eine Hydroxyschutzgruppe oder Wasserstoff darstellt, P² eine Aminoschutzgruppe darstellt und Y² wie vorstehend definiert ist, zur Bereitstellung der Verbindung 2-(2-Amino-1,6-dihydro-6-oxo-purin-9-yl)-methoxy-3-hydroxy-1-propyl-L-valinat oder eines pharmazeutisch verträglichen Salzes davon;
(e) gegebenenfalls Umwandeln der Verbindung 2-(2-Amino-1,6-dihydro-6-oxo-purin-9-yl)-methoxy-3-hydroxy-1-propyl-L-valinat in ein pharmazeutisch verträgliches Salz davon;
(f) gegebenenfalls Umwandeln des Säureadditionssalzes der Verbindung 2-(2-Amino-1,6-dihydro-6-oxo-purin-9-yl)-methoxy-3-hydroxy-1-propyl-L-valinat in eine Nicht-Salzform; oder
(g) gegebenenfalls diastereoisomeres Trennen von 2-(2-Amino-1,6-dihydro-6-oxo-purin-9-yl)-methoxy-3-hydroxy-1-propyl-L-valinat in seine (R)- und (S)-Diastereoisomeren.

2. Verfahren nach Anspruch 1, wobei das aktivierte Derivat von L-Valin Z-Valin-N-carboxyanhydrid darstellt.

3. Verfahren nach Anspruch 1, wobei das Glycerin-Derivat 1-Propionyloxy-2-prionyloxymethoxy-3-benzyloxypropan, 1-Acetoxy-2-acetoxymethoxy-3-benzyloxypropan oder 1-Benzyloxy-2-acetyloxymethoxy-3-benzyloxypropan darstellt.

4. Verfahren nach Anspruch 1, wobei das Produkt von Schritt (a) weiter mit einem Acylanhydrid mit 1-4 Kohlenstoffatomen, vorzugsweise Propionsäureanhydrid oder Acetanhydrid, behandelt wird.

5. Verbindung der Formel 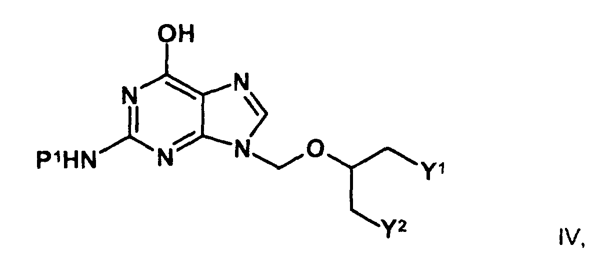 worin P¹ Propionyl, Y¹ Benzyloxy und Y² Propionyloxy darstellt.

6. Verfahren zur Herstellung der Verbindung von Anspruch 5, wobei das Verfahren umfasst:
(a) Kondensation eines Guanins der Formel 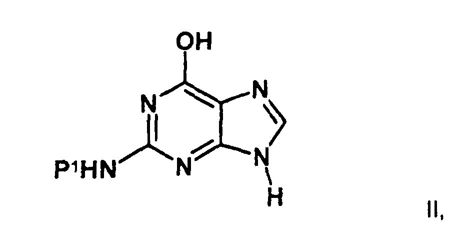 gegebenenfalls in persilylierter Form, worin P¹ Wasserstoff darstellt, mit einem 2-substituierten Glycerin-Derivat der Formel 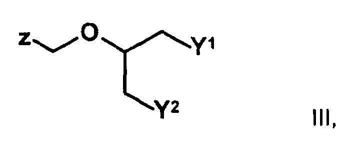 worin Y¹ Benzyloxy darstellt, Y² Propionyloxy darstellt und Z eine Abgangsgruppe, ausgewählt aus Niederacyloxy, Methoxyisopropyl, Benzyloxy, Halogen, Mesyloxy, oder Tosyloxy und dergleichen, darstellt, gegebenenfalls in Gegenwart eines Lewissäurekatalysators; und
(b) das Produkt von Schritt (a) mit einem Propionsäureanhydrid behandelt wird.

7. Verbindung der Formel 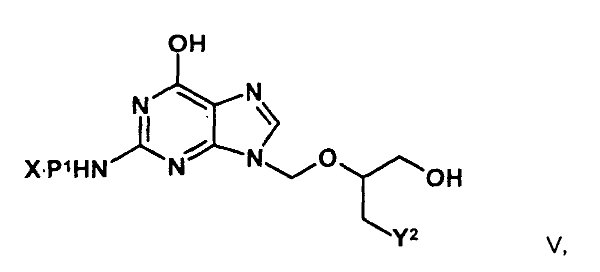 worin X eine salzbildende Gruppe darstellt und Y² Halogen, Niederacyloxy, Niederalkyloxy oder eine gegebenenfalls substituierte Aralkyloxygruppe darstellt und P¹ Wasserstoff oder eine Aminoschutzgruppe darstellt.

8. Verfahren zur Herstellung der Verbindung nach Anspruch 7, wobei das Verfahren umfasst:
(a) Kondensation eines Guanins der Formel 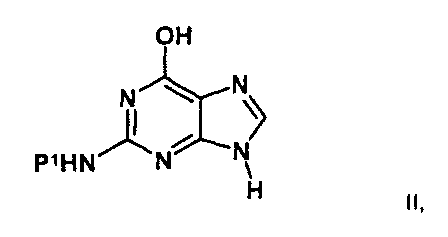 gegebenenfalls in persilylierter Form, worin P¹ Wasserstoff oder eine Aminoschutzgruppe darstellt, mit einem 2-substituierten Glycerin-Derivat der Formel 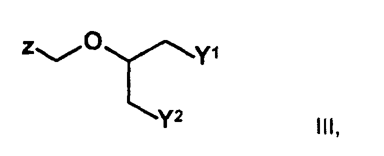 worin Y¹ und Y² unabhängig voneinander Halogen, Niederacyloxy oder eine gegebenenfalls substituierte Aralkyloxygruppe darstellen und Z eine Abgangsgruppe, ausgewählt aus Niederacyloxy, Methoxyisopropyl, Benzyloxy, Halogen, Mesyloxy oder Tosyloxy und dergleichen, darstellt, gegebenenfalls in Gegenwart eines Lewissäurekatalysators, zur Bereitstellung der Verbindung 2-(2-Amino-1,6-dihydro-6-oxo-purin-9-yl)-methoxy-3-hydroxy-1-propyl-L-valinat; oder
(b) Entfernen von einem von Y¹ oder Y² durch Hydrogenolyse, wenn sowohl Y¹ als auch Y² Aralkyloxy darstellen oder durch basische Hydrolyse, wenn einer von Y¹ oder Y² Acyloxy oder Halogen darstellt, und Umwandlung in ein Säureadditionssalz davon.

## Revendications

1. Procédé de préparation du composé 2-(2-amino-1,6-dihydro-6-oxo-purin-9-yl)-méthoxy-3-hydroxy-1-propyle-L-valinùe ou d'un de ses sels pharmaceutiquement acceptables ou de ses diastéréoisomères, lequel procédé comprend:
(a) condensation d'une guanine de formule 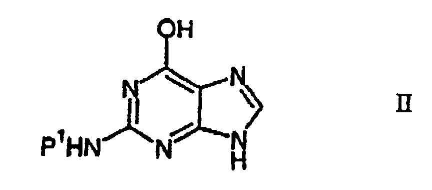 éventuellement sous forme persilylée, dans laquelle P¹ est hydrogène ou un groupe protecteur d'amino, avec un dérivé de glycérol substitué en position 2 de formule 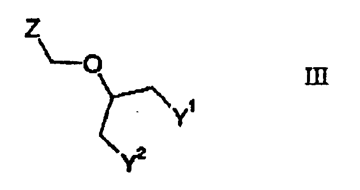 dans laquelle Y¹ et Y² représentent indépendamment un groupe halogéno ou acyloxy inférieur ou un groupe aralkyloxy éventuellement substitué, et Z est un groupe partant choisi parmi les groupes acyloxy inférieur, méthoxy isopropyle, benzyloxy, halogéno, mésyloxy ou tosyloxy, et analogues, éventuellement en présence d'un catalyseur acide de Lewis, pour obtenir un composé de formule 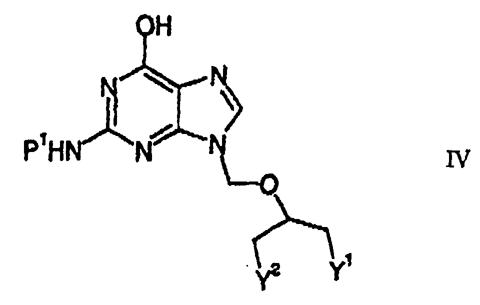 dans laquelle P¹, Y¹ et Y² sont tels que définis ci-dessus;
(b) élimination de l'un de Y¹ ou Y² par hydrogénolyse, lorsque Y¹ et Y² sont tous les deux des groupes aralkyloxy, ou par hydrolyse basique si l'un de Y¹ ou Y² est un acyloxy ou un halogéno, avec transformation subséquente ou concomitante en un de ses sels d'addition d'acide;
(c) estérification du produit de l'étape (b) avec un dérivé activé de L-valine;
(d) élimination éventuellement d'un groupe protecteur d'amino et/ou d'hydroxy d'un composé de formule 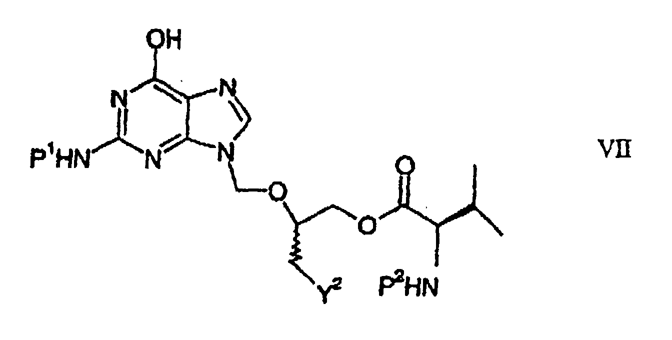 dans laquelle P¹ est un groupe protecteur d'hydroxy ou un hydrogène, P² est un groupe protecteur d'amino, et Y² a la définition donnée ci-dessus, pour obtenir le composé 2-(2-amino-1,6-dihydro-6-oxo-purin-9-yl)-méthoxy-3-hydroxy-1-propyle-L-valinate ou un de ses sels pharmaceutiquement acceptables;
(e) transformation éventuelle du composé 2-(2-amino-1,6-dihytiro-6-oxo-purin-9-yl)-méthoxy-3-hydroxy-1-propyle-L-valinate en un de ses sels pharmaceutiquement acceptables;
(f) transformation éventuelle du sel d'addition d'acide du composé 2-(2-amino-1,6-dihydro-6-oxo-purin-9-yl)-méthoxy-3-hydroxy-1-progyle-L-valinate en une forme non salifiée; ou
(g) éventuellement, séparation diastéréoisomérique du 2-(2-amino-1,6-dihydro-6-oxo-purin-9-yl)-méthoxy-3-hydroxy-1-propyle-L-valinate en ses diastéréoisomères (R) et (S).

2. Procédé selon la revendication 1, dans lequel le dérivé activé de L-valine est le Z-valine-N-carboxyanhydride.

3. Procédé selon la revendication 1, dans lequel le dérivé de glycérol est le 1-propionyloxy-2-propionyloxymcthoxy-3-benzyloxypropane, le 1-acétoxy-2-acétoxyméthoxy-3-benzyloxypropane ou le 1-benzyloxy-2-acétyloxyméthoxy-3-benzyloxypropane.

4. Procédé selon la revendication 1, dans lequel on traite en outre le produit de l'étape (a) avec un anhydride d'acyle de 1 à 4 atomes de carbone, de préférence l'anhydride propionique ou l'anhydride acétique.

5. Composé de formule 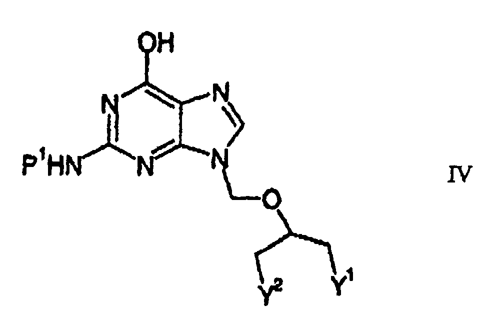 dans laquelle P¹ est un groupe propionyle, Y¹ est un groupe benzyloxy et Y² est un groupe propionyloxy.

6. Procédé pour la préparation du composé selon la revendication 5, lequel procédé comprenant :
(a) condensation d'une guanine de formule 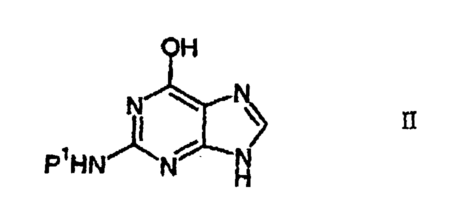 éventuellement sous forme persilylée, dans laquelle P¹ est un hydrogène, avec un dérivé de glycérol substitué en position 2 de formule 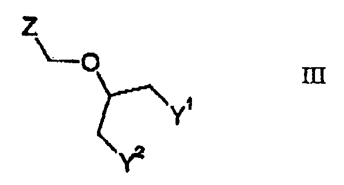 dans laquelle Y¹ est un groupe benzyloxy, Y² est un groupe propionyloxy et Z est un groupe partant choisi parmi un acyloxy inférieur, méthoxy isopropyle, benzyloxy, halogéno, mésyloxy ou tosyloxy, et analogues, éventuellement en présence d'un catalyseur acide de Lewis; et
(b) traitement du produit de l'étape (a) avec un anhydride propionique.

7. Composé de formule 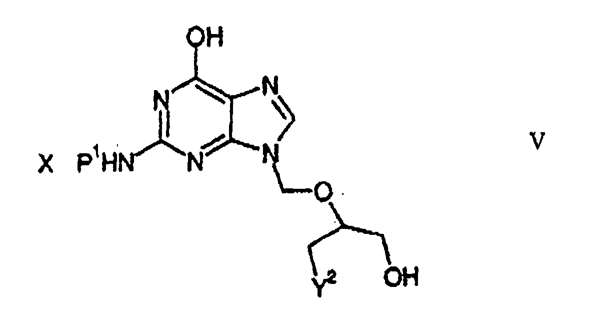 dans laquelle X est un groupe formant sel et Y² est un groupe halogéno, acyloxy inférieur, alkyloxy inférieur, ou un groupe aralkyloxy éventuellement substitué, et P¹ est un atome d'hydrogène ou un groupe protecteur d'amino.

8. Procédé de préparation du composé selon la revendication 7, lequel procédé comprenant:
(a) condensation d'une guanine de formule 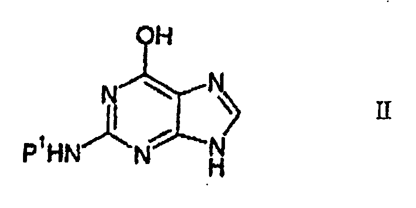 éventuellement sous forme persilylée, dans laquelle P¹ est un atome d'hydrogène ou un groupe protecteur d'amino, avec un dérivé de glycérol substitué en position 2 de formule 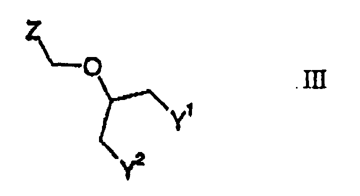 dans laquelle Y¹ et Y² représentent indépendamment un groupe halogèno, acyloxy inférieur ou un groupe aralkyloxy éventuellement substitué et Z est un groupe partant choisi parmi acyloxy inférieur, méthoxy isopropyle, benzyloxy, halogéno, mésyloxy ou tosyloxy, et analogues, éventuellement en présence d'un catalyseur acide de Lewis, pour obtenir le composé 2-(2-amino-1,6-dihydro-6-oxo-purin-9-yl)-méthoxy-3-hydroxy-1-propyle-L-valinate, ou
(b) élimination de l'un de Y¹ ou Y² par hydrogénolyse, lorsque Y¹ et Y² sont tous les deux aralkyloxy, ou par hydrolyse basique si l'un de Y¹ ou Y² est acyloxy ou halogéno, et transformation en un de ses sels d'addition d'acide.
